(19) Europäisches Patentamt
European Patent Office
Office européen des brevets

(11) Publication number : **0 298 673 B1**

# (12) EUROPEAN PATENT SPECIFICATION

(45) Date of publication of patent specification : **04.12.91 Bulletin 91/49**

(51) Int. Cl.$^5$ : **B60C 3/04**

(21) Application number : **88306058.4**

(22) Date of filing : **01.07.88**

## (54) Radial tyre.

(30) Priority : **06.07.87 JP 168346/87**

(43) Date of publication of application : **11.01.89 Bulletin 89/02**

(45) Publication of the grant of the patent : **04.12.91 Bulletin 91/49**

(84) Designated Contracting States : **DE FR GB IT**

(56) References cited :
**DE-A- 3 411 909**
**FR-A- 2 578 789**
**US-A- 4 513 802**

(73) Proprietor : **SUMITOMO RUBBER INDUSTRIES LIMITED**
**No. 1-1, Tsutsui-cho 1-chome**
**Chuo-ku Kobe-shi Hyogo 651 (JP)**

(72) Inventor : **Saito, Kenji**
**14-80 Koujidai 4-chome**
**Kobe-shi Hyogo-ken (JP)**

(74) Representative : **Stewart, Charles Geoffrey**
**SP TYRES UK LIMITED Tyre Technical Division**
**Fort Dunlop Birmingham B24 9QT (GB)**

EP 0 298 673 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a radial tyre having an aspect of ratio of 65% or less, and more particularly to a carcass profile for such a tyre by which ride comfort is improved at no sacrifice of steering stability.

In general, pneumatic radial tyres with a metallic cord belt reinforcement are widely used because of their superior high-speed durability, steering stability, wear resistance and fuel economy. In order to further enhance these properties especially steering stability, tyres with a low aspect ratio have been recently used.

If the aspect ratio is lowered, the cornering power and the lateral stiffness of the tyre are increased so that the steering stability of the vehicle can be upgraded. Therefore, tyres having an aspect ratio of 65% or 60% have increased in number, and furthermore tyres having aspect ratios of 55% or 40% have already appeared.

Such low aspect ratio radial tyres have, however, a common defect ; uncomfortable ride. It is because the longitudinal stiffness as well as the above mentioned lateral stiffness is increased as the aspect ratio is decreased, and impacts from road surface to the tread are likely to be propagated to the vehicle through the sidewalls, beads, rim and axle.

As a means of improving the ride comfort, a reduction of belt stiffness by means such as reducing of the belt width or a reduction of the modulus of the belt cords, or lessening the stiffness of the bead portion can be considered, but these means cannot be put into effect without sacrificing steering stability.

To solve these contradictory problems, special materials for bead reinforcement and a carcass winding-up structure were disclosed in Japanese Patent Publication No. 56-3806. This technique shows an effect in tyres having a conventional high aspect ratio, but it is insufficient in the tyres having a low or aspect ratio especially in very low aspect ratio radial tyres of 65% or less.

It is therefore, an object of the present invention to improve the ride comfort in a low aspect ratio radial tyre having an aspect ratio of 65% or less without spoiling steering stability.

A known tyre according to the preamble of claim 1 is shown, e.g. in US-A-4513802.

Accordingly the present invention provides a radial tyre comprising a pair of bead cores provided in bead portions of the tyre, a carcass having at least one ply cord turned up at its edge around the bead cores and defining a carcass line and a belt on the carcass, having at least two plies of metallic cords, and defining a belt width, the carcass line between a point under the edge of the belt and a point substantially at the upper end of the bead core comprises an upper arc having its centre inside the tyre and a lower arc having its centre outside the tyre, characterised in that the radius of curvature of the upper arc divided by the radius of curvature of the lower arc is less than 0.8, and that the tyre has an aspect ratio of 65% or less.

Here, the carcass line is defined as the centre line of the carcass with regard to its thickness when the tyre is assembled on a specified rim and the specified internal pressure is applied, regardless of the number of carcass plies.

An embodiment of the present invention will now be described by way of example referring to the attached drawings in which :

Fig. 1. is a radial cross sectional view of one side of a radial tyre according to the present invention ;

Fig. 2 is a graph showing the relationship between longitudinal stiffness and aspect ratio ;

Fig. 3 is a graph explaining the longitudinal stiffness in the present invention ;

Fig. 4 is a schematic view showing a carcass line according to the present invention and a carcass of a reference tyre and

Fig. 5 shows two cross sectional views of bead reinforcing members.

A tyre 1 in Fig. 1 is shown assembled on its specified rim 9 inflated to its specified internal pressure.

The tyre 1 has an annular tread 2, a pair of bead portions, and a pair of sidewalls 3 extending radially inward one from each edge of the tread 2 to the respective bead portions.

Two beads cores 4 are provided one in each bead portion. The tyre also has reinforcement carcass 5, tread rubber thereon and a belt 6 between the carcass 5 and the tread rubber.

The carcass 5 is composed of at least one ply of cords extending through the tread portion and sidewall portions, and turned up at its edges around the bead cores to be secured thereto. In this embodiment, the carcass 5 comprises one ply of cords, but two or more plies may be used.

The cords of the carcass ply may be organic fibre materials such as nylon, polyester, aromatic polyamide or metallic materials.

The belt 6 is composed of two plies of metallic cords, located radially outside the carcass.

The cords of each ply are arranged at an angle of 15 to 30 degrees with respect to the circumferential direction of the tyre, and the cords of each ply cross with those of the adjacent ply.

The belt 6 in this invention may include three or more plies of metallic cords, and furthermore, a structure (not shown) having a reinforcing layer composed or organic fibre cords in its outermost layer in the radial direction can be employed.

In Fig. 1 numeral 5 indicates both the carcass and the carcass line, wherein the carcass line is, as mentioned above, defined as the centre line of the carcass when the tyre is assembled on its specified rim and the specified internal pressure is applied.

One of the most important factors determining the ride comfort of a tyre is the longitudinal stiffness. Fig. 2 shows the relationship between longitudinal stiffness and aspect ratio. As the aspect ratio becomes small, the longitudinal stiffness increases. This tendency is apparent especially where the aspect ratio is less than 65%.

As shown in Fig. 3, the longitudinal stiffness in this invention is defined as the quotient of the load fluctuation (200 kg) divided by the longitudinal deflection (delta E) when the tyre is subjected to the load fluctuation from a specified load Po – 100 kg to the specified load Po + 100 kg. That is, an increase of longitudinal stiffness means a reduction in longitudinal deflection.

The inventor has discovered a shape in which the longitudinal deflection of the sidewall portions is raised without changing the length of the carcass line between a point A and a point C.

He found that the carcass line 5 between the point A and the point C should be composed of only two arcs; an upper arc 7 and a lower arc 8. Also the radius of curvature R1 of the upper arc divided by the radius of curvature R2 of the lower arc should be less than 0.8. When the values more than 0.8, the effect to increase longitudinal deflection, that is, the lessening of longitudinal stiffness is almost nullified, so that it becomes ineffective to simply form said carcass line only by two arcs.

The point A is the intersection between a perpendicular from the belt edge to the tyre axis and the carcass line, wherein the belt edge is defined as the edge of the area where at least two belt plies are overlaid on the carcass. That is, the point A is the axially outermost of the area (indicated by WB in Fig. 1) where the carcass is restricted by the belt. The point C is the intersection between a line drawn from the upper end of the bead core parallel to the axis of tyre and the carcass line, which is a point on the carcass which does not change its position even with load and rotation.

The upper arc 7 is an arc having its centre inside the tyre, and the lower arc 8 is an arc having its centre outside the tyre. Accordingly, the carcass line between the point A and the point B has a point of inflection B. In other words, the upper arc forms an upper part between the points A and B, and the lower arc forms a lower part between the points B and C.

In this embodiment, the centre of the upper arc is located on a line drawn parallel to the axis of tyre from the maximum width point at which the section width of the tyre becomes maximum, and the centre of the lower arc is located on the bead base line, whereby the point of inflection B is located between the maximum width point and the point C.

Furthermore, the belt preferably satisfies the following relation.

$$(WB/H1) \times (\text{Aspect ratio}/100) > 0.8$$

wherein

WB is the belt width defined as a width of the area where at least two belt plies are overlaid, measured parallel to the tyre axis ; and

H1 is the sectional height of the carcass measured from the bead base line BL.

In the case of a narrow belt width where the value is less than 0.8, a preferable ride comfort can be easily obtained but the circumferential stiffness of the shoulder portions of the tyre falls and it is hence difficult to keep the necessary steering stability which is one of the features of the low aspect ratio.

The longitudinal deflection becomes larger when the radius R2 of lower arc is greater than the radius R1 of upper arc, but when R2 is excessively large, the part A-B occupied by the upper arc 7 becomes small to cause adverse effects. As a result, R2 is preferably less than 0.6 times the sectional height H1 of the carcass. If R2 is less than 0.4 times H1, it is difficult to set the value R1/R2 smaller than 0.8. From such a point, the radius R2 of the lower arc 8 is preferably in the range from 0.4 to 0.6 times the sectional height H1 of the carcass.

The carcass line of the present invention can be obtained by setting the required length of carcass, that is, length B-C, the positions of points A, B and C, and R2 of the lower arc 8. As explained above, point A is the outermost point of the carcass line restricted by the belt 6, which position is determined by the belt structure, and point C is determined by the position of the bead core. Point B and the radius R2 of the lower arc 8 are specified by the position of the bead core 4 and the bead reinforcing member 10.

The bead reinforcing member 10 raises the bending stiffness in the lateral section, and has a tapered shape so that the bending stiffness decreases from the bead core radially outwardly. Fig. 5 shows two examples of such a bead reinforcing member.

The bead reinforcing member of Fig. 5 (A) comprises a bead apex 10a composed of rubber having a JIS (A) hardness of 74 to 95, disposed radially outside the bead core and having a tapered cross sectional shape.

The bead reinforcing member of Fig. 5 (B) comprises the bead apex 10a and additional further organic fibre cords 10b covering the bead core 4 and the bead apex.

It is preferred to set the height H3 of this bead reinforcing member 10 at 4/5 or less of the height H2 at the maximum width point of the tyre. When H3 exceeds 4/5 of H2, the bending stiffness in the part A-B increases and the longitudinal deflection in the part A-B decreases. It is better to place the upper end of the bead reinforcing member 10 radially outside the point B.

Test tyres having specifications shown in Table 1 were produced as working examples of the present invention and reference tyres, and indoor testing and ride feel tests on actual cars were carried out.

The ride feel test was carried out by mounting the tyres on a Japanese made passenger car with a displacement of 1800 cc, and the evaluated results are shown by an index (larger numbers indicate preferable ride feel).

In the tyres of the present invention, the longitudinal stiffness was reduced and the ride comfort was improved. On the other hand, the lateral stiffness was not decreased and no lowering in the measured cornering power could be observed.

Fig. 4 shows the comparison of the carcass line profiles in Working example 1 and reference tyre 1. In this drawing, the lengths of the carcass lines from point A to point C are identical.

As apparent from the above test results, the ride comfort of low aspect ratio radial tyres having an aspect ratio of 65% or less according to the present invention, could be improved without spoiling steering stability.

TABLE 1

| | | Ex.1 | Ex.2 | Ex.3 | Ref.1 | Ex.4 | Ref.2 |
|---|---|---|---|---|---|---|---|
| Tire size | | 185/60 R14 | 185/60 R14 | 185/60 R14 | 185/60 R14 | 195/65 R14 | 195/65 R14 |
| Aspect ratio/100 | | 0.60 | 0.60 | 0.60 | 0.60 | 0.65 | 0.65 |
| Belt width | WB (mm) | 138 | 138 | 138 | 138 | 148 | 148 |
| Carcass height | H1 (mm) | 99 | 99 | 100 | 99 | 111 | 111 |
| Height at maximum width | H2 (mm) | 61 | 63 | 62 | 60 | 67 | 65 |
| Bead reinforcing member hight | H3 (mm) | 41 | 45 | 41 | 41 | 45 | 45 |
| Radius of upper arc | R1 (mm) | 32.4 | 29.5 | 30.0 | 35.3 | 40.0 | 42.0 |
| Radius of lower arc | R2 (mm) | 43.5 | 58.0 | 45.0 | 30.5 | 56.0 | 45.0 |
| R1/R2 | | 0.745 | 0.509 | 0.450 | 1.157 | 0.714 | 0.933 |
| (WB/H1)X(Aspect ratio/100) | | 0.836 | 0.836 | 0.828 | 0.836 | 0.867 | 0.867 |
| R2/H1 | | 0.439 | 0.585 | 0.450 | 0.308 | 0.505 | 0.405 |
| H3/H2 | | 0.672 | 0.714 | 0.661 | 0.683 | 0.672 | 0.692 |
| Longitudinal deflection | (mm) | 20.8 | 20.5 | 21.0 | 20.1 | 25.2 | 24.0 |
| Longitudinal stiffness | (kg/mm) | 19.0 | 19.8 | 18.9 | 20.1 | 18.1 | 18.9 |
| Lateral stiffness | (kg/mm) | 14.3 | 15.6 | 14.7 | 14.4 | 13.2 | 13.1 |
| Cornering power | (kg/deg) | 111 | 113 | 109 | 109 | 99 | 98 |
| Riding comfort, feeling index | | 105 | 110 | 115 | 100 | 105 | 100 |
| Conditions of bench test | | | | | | | |
| Rim size | | 5 1/2-JJX14 | 5 1/2-JJX14 | 5 1/2-JJX14 | 5 1/2-JJX14 | 6-JJx14 | 6-JJx14 |
| Air pressure | (kg/sq.cm) | 2.0 | 2.0 | 2.0 | 2.0 | 2.0 | 2.0 |
| Load | (kg) | 350 | 350 | 350 | 350 | 400 | 400 |

## Claims

1. A radial tyre comprising a pair of bead cores (4) provided in bead portions of the tyre, a carcass having at least one ply cord turned up at its edge around the bead cores (4) and defining a carcass line (5), and a belt (6) on the carcass (5) having at least two plies of metallic cords, and defining a belt width (WB), the carcass line (5) between a point (A) under the edge of the belt (6) and a point (C) substantially at the upper end of the bead core (4) comprising an upper arc (A, B) having its centre inside the tyre and a lower arc (B, C) having its centre outside the tyre, characterised in that the radius of curvature (R1) of the upper arc (A, B) divided by the radius of curvature (R2) of the lower arc (B, C) is less than 0.8, and that the tyre has an aspect ratio of 65% or less.

2. A radial tyre as set forth in claim 1, characterised by the product of the ratio (WB/H1) of the belt width (WB) to the carcass sectional height (H1) and the aspect ratio/100 is greater than 0.8.

3. A radial tyre as set forth in claim 1 or claim 2, characterised by the radius of curvature (R2) of the lower arc is in the range of 0.4 to 0.6 times the carcass sectional height (H1).

4. A radial tyre as set forth in claims 1, 2 or 3 characterised by a bead reinforcing member (10) having a height 4/5 or less of the height (H2) at the maximum width point of the tyre.

5. A radial tyre according to claim 4 characterised in that the upper end of the bead reinforcing member (10) is radially outside the point B.

## Patentansprüche

1. Radialreifen, welcher umfaßt ein Paar Wulstkerne (4), von denen jeweils einer in jedem Wulstabschnitt des Reifens vorgesehen ist, eine Karkasse mit mindestens einer Kordlage, die an ihrer Kante um die Wulstkerne (4) aufwärts zurückgeschlagen ist und eine Karkasslinie (5) bestimmt, und einen Gürtel (6) an der Karkasse (5) mit mindestens zwei Lagen von Metallkorden, der eine Gürtelbreite (WB) bestimmt, wobei die Karkasslinie (5) zwischen einer Stelle (A) unter der Kante des Gürtels (6) und einer Stelle (C) im wesentlichen am oberen Ende des Wulstkerns (4) einen oberen Bogen (A, B) umfaßt, dessen Krümmumgsmittelpunkt innerhalb des Reifens liegt, und einen unteren Bogen (B, C), dessen Krümmumgsmittelpunkt außerhalb des Reifens liegt, dadurch gekennzeichnet, daß der Krümmungsradius (R1) des oberen Bogens (A, B), geteilt durch den Krümmungsradius (R2) des unteren Bogens (B, C) weniger als 0,8 ergibt, und daß der Reifen ein Querschnittsverhältnis von 65% oder weniger hat.

2. Radialreifen nach Anspruch 1, dadurch gekennzeichnet, daß das Produkt des Verhältniswertes (WB/H1) aus Gürtelbreite (WB) durch Karkass-Querschnittshöhe (H1) mit dem Querschnittsverhältnis/100 mehr als 0,8 ergibt.

3. Radialreifen nach Anspruch 1 oder 2, dadurch gekennzeichnet, daß der Krümmungsradius (R2) des unteren Bogens im Bereich des 0,4- bis 0,6-fachen der Karkass-Querschnittshöhe (H1) liegt.

4. Radialreifen nach einem der Ansprüche 1, 2 oder 3, gekennzeichnet durch ein Wulstverstärkungsglied (10) mit einer Höhe von 4/5 oder weniger der Höhe (H2) der Stelle maximaler Reifenbreite.

5. Radialreifen nach Anspruch 4, dadurch gekennzeichnet, daß das obere Ende des Wulstverstärkungsgliedes (10) sich radial außerhalb der Stelle B befindet.

## Revendications

1. Pneumatique à carcasse radiale comprenant une paire de tringles (4) placées dans les parties de talon du pneumatique, une carcasse ayant au moins des câblés d'une nappe repliés à un bord autour des tringles (4) et délimitant une courbe de carcasse (5), et une ceinture (6) placée sur la carcasse (5) et ayant au moins deux nappes de câblés métalliques et délimitant une largeur de ceinture (WB), la courbe de carcasse (5), entre un point (A) qui se trouve sous le bord de la ceinture (6) et un point (C) qui se trouve pratiquement à l'extrémité supérieure de la tringle (4), comportant un arc supérieur (A, B) dont le centre se trouve à l'intérieur du pneumatique et un arc inférieur (B, C) dont le centre se trouve à l'extérieur du pneumatique, caractérisé en ce que le rayon de courbure (R1) de l'arc supérieur (A, B) divisé par le rayon de courbure (R2) de l'arc inférieur (B, C) est inférieur à 0,8, et en ce que le pneumatique a un rapport d'allongement inférieur ou égal à 65%.

2. Pneumatique à carcasse radiale selon la revendication 1, caractérisé en ce que le produit du rapport (WB/H1) de la largeur (WB) de la ceinture à la hauteur en coupe (H1) de la carcasse et du rapport d'allongement, divisé par 100, est supérieur à 0,8.

3. Pneumatique à carcasse selon la revendication 1 ou 2, caractérisé en ce que le rayon de courbure (R2) de l'arc inférieur est compris entre 0,4 et 0,6 fois la hauteur en coupe (H1) de la carcasse.

4. Pneumatique à carcasse radiale selon la revendication 1, 2 ou 3, caractérisé par un organe (10) d'armature de talon ayant une hauteur inférieure ou égale aux quatre cinquièmes de la hauteur (H2) au point de largeur maximale du pneumatique.

5. Pneumatique à carcasse radiale selon la revendication 4, caractérisé en ce que l'extrémité supérieure de l'organe (10) d'armature de talon se trouve radialement à l'extérieur du point B.

FIG.1

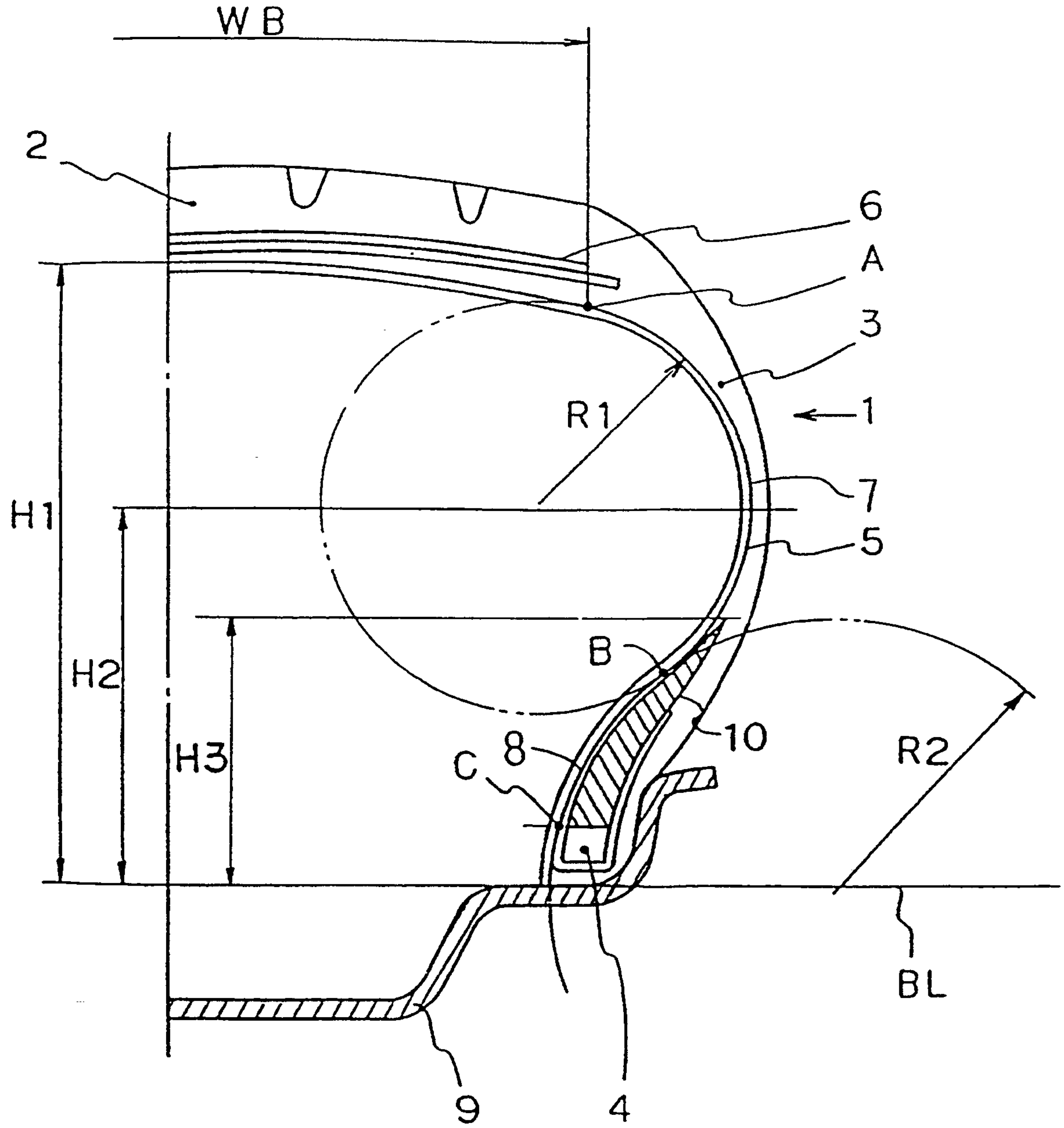

FIG.2

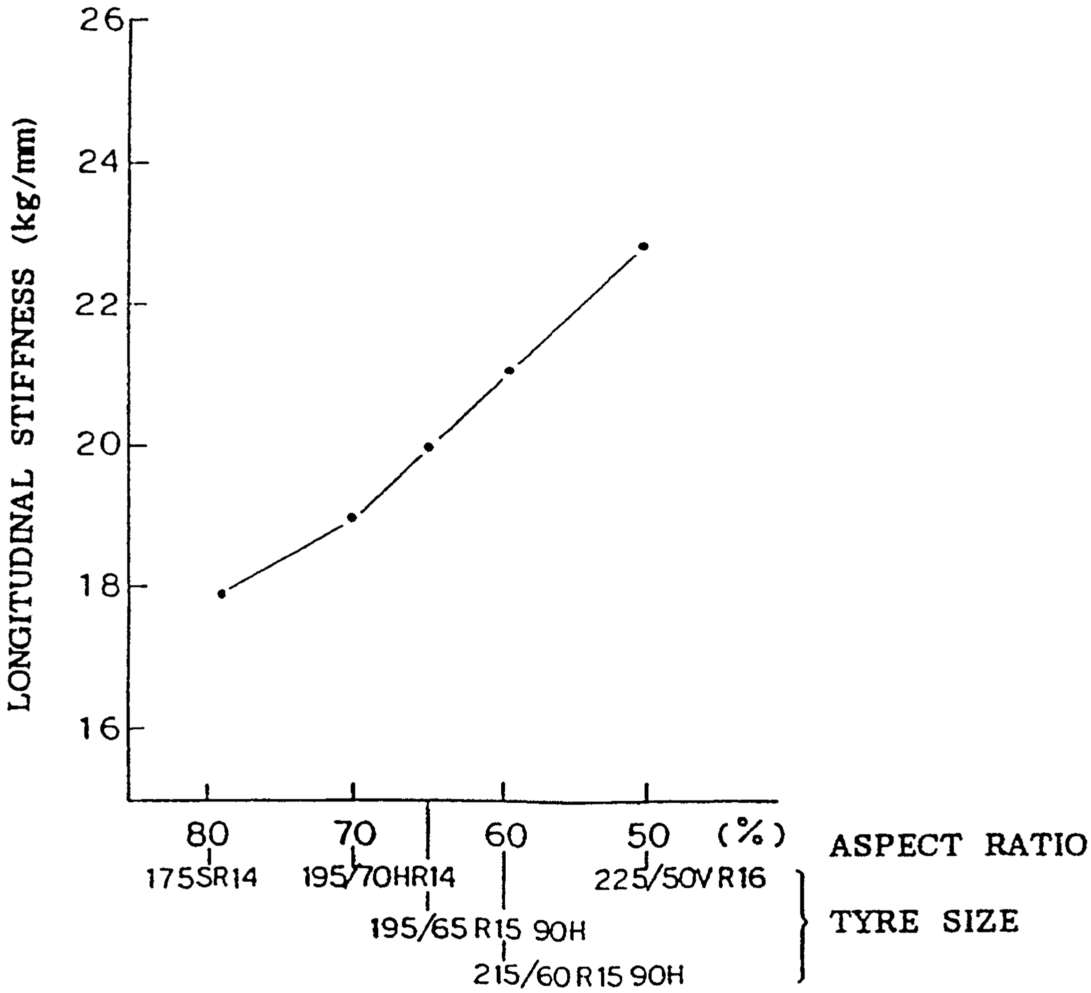

26
24
22
20
18
16
LONGITUDINAL STIFFNESS (kg/mm)
80
70
60
50
(%)
ASPECT RATIO
175SR14
195/70HR14
195/65 R15 90H
215/60 R15 90H
225/50VR16
TYRE SIZE

FIG.3

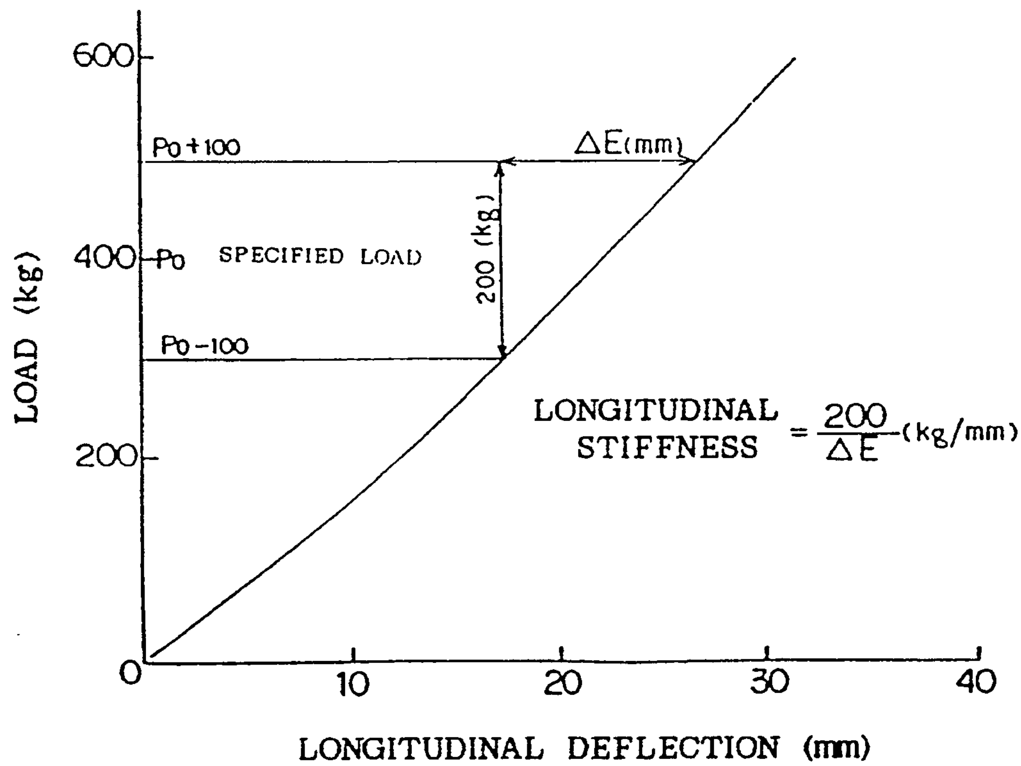
600
400
200
0
LOAD (kg)
Po+100
Po SPECIFIED LOAD
Po-100
200 (kg)
ΔE(mm)
LONGITUDINAL STIFFNESS = 200/ΔE (kg/mm)
10
20
30
40
LONGITUDINAL DEFLECTION (mm)

FIG.4

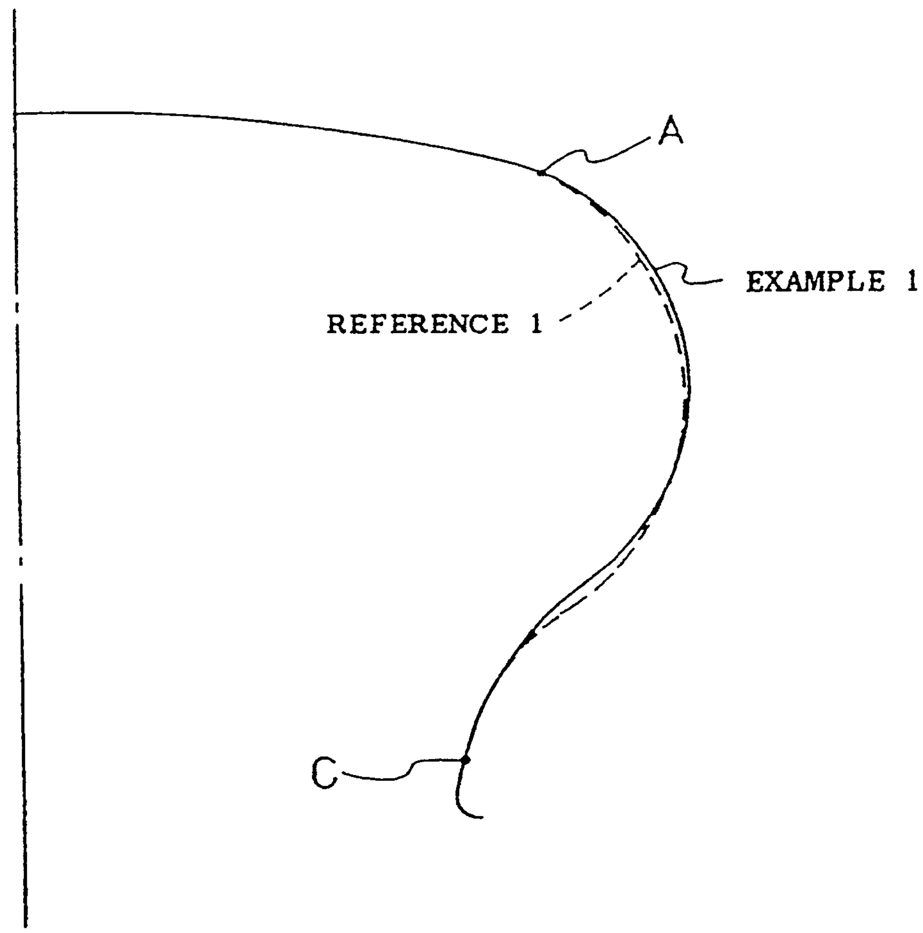

FIG.5

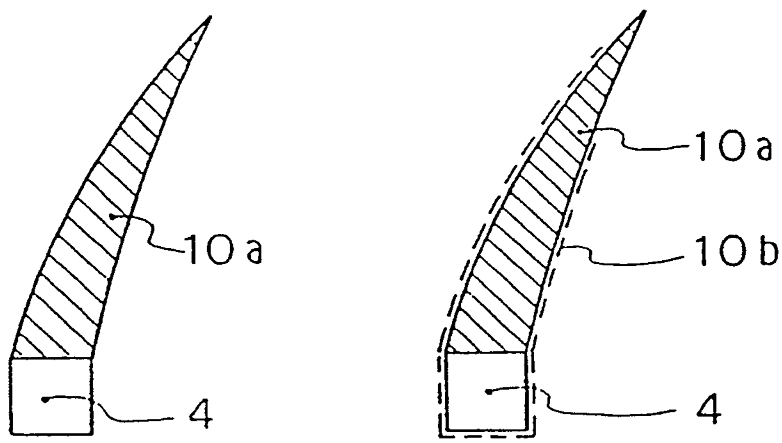


(A) (B)